# EUROPEAN PATENT APPLICATION

(11) **EP 4 306 223 A1**
(43) Date of publication of application: **17.01.2024**
(21) Application number: 22766679.9
(22) Date of filing: 01.02.2022
(51) Int. Cl.: B05D 3/10, B08B 3/02, B32B 27/00, B32B 7/06

(54) **METHOD FOR SEPARATING COATING FROM FILM WITH COATING, AND APPARATUS FOR SEPARATING COATING**

(30) Priority: 12.03.2021 JP 2021039864
(71) Applicant: Toray Industries, Inc., Tokyo 103-8666 (JP)
(72) Inventor: TANINO, Kiyoshi, Otsu-shi, Shiga 520-8558 (JP); HIGASHIDA, Yoshihisa, Otsu-shi, Shiga 520-8558 (JP); WATANABE, Kazutaka, Otsu-shi, Shiga 520-8558 (JP); SUZUKI, Tadamasa, Otsu-shi, Shiga 520-8558 (JP)
(74) Representative: Hoefer & Partner Patentanwälte mbB
(86) International application number: PCT/JP2022/003837
(87) International publication number: WO 2022/190713

(57) **Abstract**

Provided are coating film removing method and a coating film removing equipment that can efficiently remove a coating film from a surface of a coated film including a coating film containing a water-soluble resin by using a very small amount of solvent. A method for removing a coating film from a coated film according to the present invention is a method for removing a coating film from a coated film including a coating film containing a water-soluble resin on at least one side of a base film. The method is characterized in that a cleaning liquid in the form of droplets is supplied to a surface of the coating film, the cleaning liquid is retained in the form of droplets on the surface of the coating film, and then the coating film containing the cleaning liquid is removed off from the coated film.

## Description

### Field

The present invention relates to a method for removing a coating from a coated film and an equipment for removing the coating, which enable efficient removal of a coating on a surface of a thermoplastic resin film. Background

While plastics are used in a variety of fields, they are considered to be substances causing marine pollution such as microplastics, and the load of plastics on the environment needs to be reduced urgently.

In recent years, as the number of electronic devices such as CPUs installed in computers and smartphones has been increasing with the advance of the Internet of Things (IoT), the number of multilayer ceramic capacitors (MLCCs) required to drive these electronic devices has been rapidly increasing. A common method for manufacturing such an MLCC uses, as a carrier sheet, a release film including a release layer formed on a plastic base film, and includes a step of forming a ceramic green sheet layer on the release film, and a step of peeling the ceramic green sheet layer to obtain a ceramic green sheet. In this step, the release film from which the ceramic sheet has been peeled is discarded as an unwanted substance.

In other words, the increase of release films as waste resulting from the rapid increase in MLCC production volume in recent years has become an environmental issue, and efforts to reuse the base film are gaining momentum. The components of the release layer contained in the release film are generally different in composition from the components of the base film from the viewpoint of releasability. Thus, when a release film with a release layer is remelted without being treated to form a recycled film, this film cannot be formed stably because the components of the release layer are present therein as foreign matter.

Patent Literature 1 discloses, as a method for removing release components from a release film, a method in which a release film including a water-soluble resin layer formed between a base film and a release layer is used, it is immersed in a hot water bath for two seconds or more, and then the release film surface is scraped with a brush roll to remove off the release layer.

### Citation List

### Patent Literature

Patent Literature 1: Japanese Patent Application Laid-open No. 2004-363140

### Summary

### Technical Problem

However, the method for removing a coating disclosed in Patent Literature 1 has a problem in that, due to elution of the water-soluble resin layer into the hot water bath, the resin concentration in the hot water increases with the passage of treatment time, making it impossible to continuously maintain the initial removability. Even when a method of increasing the amount of supplied water is used to suppress the increase in resin concentration, the amount of wastewater also increases with the increasing amount of supplied water, and thus there is a problem that not only the cleaning cost significantly increases but also load on the environment significantly increases.

In view of this, it is an object of the present invention to provide a coating removing method and a coating removing equipment that, in order to obtain a base film with which a recycled film can be stably formed from a used coated film even when the film is remelted, can efficiently remove a coating from a surface of a coated film including a coating containing a water-soluble resin on at least one side of a base film by dissolving the water-soluble resin with a very small amount of a solvent. Solution to Problem

A coating removing method according to the present invention to solve the object is a method for removing a coating from a coated film including a coating containing a water-soluble resin on at least one side of a base film. The method includes: supplying a cleaning liquid in a form of droplets to a surface of the coating, and retaining the cleaning liquid in the form of droplets on the surface of the coating; and c removing the coating containing the cleaning liquid from the coated film.

The coating removing method according to the present invention is preferably the following methods.

The cleaning liquid is supplied to the surface of the coating while being heated to 40°C or higher.

The coated film is heated to 40°C or higher.

The coating film contains a curable silicone resin.

The cleaning liquid is water.

A diameter of the droplets of the cleaning liquid is 1 mm or less.

A coating removing equipment according to the present invention to solve the object is an equipment for removing a coating from a coated film including a coating containing a water-soluble resin on at least one side of a base film. The equipment includes: a cleaning-liquid applying mechanism configured to dispense a cleaning liquid in a form of droplets toward a surface of the coating film such that the cleaning liquid is able to be retained in the form of droplets on the surface of the coating; and a removing mechanism configured to remove the coating film containing the cleaning liquid from the coated film in which the cleaning liquid has been supplied to the surface of the coating.

The coating film removing equipment according to the present invention preferably has the following aspects.

The cleaning-liquid supplying mechanism includes a unit configured to heat the cleaning liquid.

The coating film removing equipment further includes a unit configured to heat the coated film.

### Advantageous Effects of Invention

By the method for removing a coating film and the equipment for removing a coating film according to the present invention, the coating film can be efficiently removed from the coated film including the coating film containing the water-soluble resin on at least one side of the base film with a small amount of the cleaning liquid.

### Brief Description of Drawings

FIG. 1 is a schematic diagram of a removing equipment 101 according to a first embodiment of the present invention.
FIG. 2 is a schematic diagram of a removing equipment 201 according to a second embodiment of the present invention.
FIG. 3 is a schematic diagram of a removing equipment 301 according to a third embodiment of the present invention.
FIG. 4 is a schematic diagram of a conventional removing equipment 401.
FIG. 5 is a schematic diagram of a removing equipment 501 according to an embodiment different from the present invention.
FIG. 6 is a schematic diagram of a removing equipment 601 according to an embodiment different from the present invention.

### Description of Embodiments

As a result of diligently studying a method for efficiently removing a coating film from a surface of a coated film including a coating film containing a water-soluble resin on at least one side of a base film, using a very small amount of a cleaning liquid, the inventors of the present invention have come up with a coating film removing method and a coating film removing equipment for a coated film as follows.

### [Coated film to be processed]

The coating film removing method for a coated film in the present invention is a method intended for a coated film including a coating film containing a water-soluble resin on at least one side of a base film, by which the coating film containing a cleaning liquid is removed off from the base film.

As the coated film to be processed, all of coated films can be processed that have coatings containing water-soluble resins for which load on the environment and other factors are considered. The water-soluble resin is more preferably a resin that contains, as a main component, at least one type of water-soluble polyester resins, polyester urethane resins, acrylic resins, ethylene ionomer resins, polyvinyl alcohol resins, polyvinyl pyrrolidone resins, ethylene-vinyl alcohol resins, and starch.

The coating film containing the water-soluble resin may be a single-layer product containing the water-soluble resin, may be a layered product including two or more layers containing the water-soluble resin, or may be a layered product including a layer containing the water-soluble resin and a layer containing no water-soluble resin.

A coated release film containing a release component in addition to the water-soluble resin in part of the coating is particularly preferable, which can efficiently exert the effect of removing the coating film. The release component herein is a component that increases the contact angle of the coating surface to the cleaning liquid, that is, reduces the surface energy of the coating film. Examples thereof include a curable silicone resin compound containing dimethylsiloxane as a main skeleton, a compound having a long-chain alkyl group, and a compound containing fluorine. The coating film may be a layer containing the water-soluble resin and the release component, or may be a coating film in which a layer containing the water-soluble resin and a layer containing the release component are layered together. In the layered coating film, it is preferable that the layer containing the water-soluble resin is formed directly on the base film and the layer containing the release component is then formed on the top surface, and it is particularly preferable to use, as the release component, a curable silicone resin compound containing, as a main skeleton, dimethylsiloxane that has high water permeability and can be suitably used as the cleaning liquid.

### [Method for removing coating from coated film]

The coating film removing method in the present invention is a removing method in which the cleaning liquid in the form of droplets is supplied to the coating surface of the above-described coated film, the cleaning liquid is retained in the form of droplets on the coating surface, and then the coating film containing the cleaning liquid is removed from the base film.

As a method of supplying the cleaning liquid to the coating surface, a method of supplying the cleaning liquid in the form of a sheet, or a thin film, as in a general coating process can be easily conceived of. However, for a coated film a coating of which has a surface tension lower than the surface tension of the cleaning liquid, such as a coated film containing a release component in part of the coating film, there is a problem that the cleaning liquid is shed by the coating and flows greatly, the cleaning liquid is unevenly distributed, and the coating fails to be removed in areas where no cleaning liquid is present.

In contrast, according to the present invention, by discretely supplying the cleaning liquid to the coating film in the form of droplets, the cleaning liquid can be supplied to substantially the entire surface of the coating film, even to a coated film a coating of which has a surface tension lower than the surface tension of the cleaning liquid, because the cleaning liquid supplied to the coating film surface maintains the form of droplets without flowing. The supplied cleaning liquid spreads around the area while dissolving the water-soluble resin in the coating, and the cleaning liquid is distributed over the entire surface of the coating film, so that the water-soluble resin component dissolves over the entire surface of the coating film, and the coating film containing the cleaning liquid can be easily removed off from the base film. Even if the coating of the coated film to be processed is a layered coating film containing a release component on the top surface, when the curable silicone resin compound containing dimethylsiloxane as a main skeleton in the release component is used, the cleaning liquid will permeate from the coating surface and reach the layer containing the water-soluble resin, and thus the same cleaning effect can be exerted to remove off the coating film.

The size of the droplets of the cleaning liquid to be supplied to the surface of the coating film may be any size that allows the cleaning liquid to be discretely held on the coating film in the form of droplets. However, if the droplet diameter is too large, the discretely supplied cleaning liquid may flow due to tilting or vibration of the coated film and be unevenly distributed. Thus, the droplet diameter is preferably 1 mm or less in order to prevent the droplets from flowing on the coating film. In order to efficiently clean the entire surface of the coating film, it is preferable to supply the cleaning liquid of 1 cm³ or more per unit area of 1 m² for a coated film including a coating film thickness of 1 µm or less in total. By doing so, even with the droplets discretely supplied onto the coating film, the cleaning liquid spreads around the area to be distributed entirely while dissolving the water-soluble resin, and thus the coating film containing the cleaning liquid on substantially the entire surface of the coated film can be removed off. The diameter of the droplets of the cleaning liquid described here is a numerical value when droplets at less than one second after the cleaning liquid has been supplied to the coating surface in the form of droplets are observed and measured under a microscope. By using a transparent coated film, for example, and observing the supplied droplets of the cleaning liquid from the back side of the film, the diameter of the droplets can be easily measured. If one second or more has elapsed since the cleaning liquid was supplied to the coating surface in the form of droplets, a phenomenon in which the cleaning liquid spreads while dissolving the water-soluble resin has progressed, and the measurement may be difficult.

In the coating film removing method in the present invention, the higher the temperature of the cleaning liquid supplied to the coated film, the faster the dissolution rate of the water-soluble resin, that is, the better the cleaning effect, and thus the temperature of the cleaning liquid supplied to the coated film is preferably 40°C or higher. To prevent dimensional changes and flatness deterioration of the base film due to heat, the temperature of the cleaning liquid to be supplied to the coated film is preferably 150°C or lower. Thus, the cleaning liquid is preferably dispensed in the form of droplets the temperature of which is adjusted in accordance with the configuration of the equipment to be used such that the temperature of the cleaning liquid and the film temperature at areas where the cleaning liquid is applied are each set within the range of 40°C to 150°C.

In the coating film removing method in the present invention, raising the temperature of the coated film can also increase the dissolution rate of the water-soluble resin by the cleaning liquid supplied to the coating surface, that is, the cleaning effect is improved, and thus the temperature of the coated film is preferably set to 40°C or higher and 150°C or lower similarly to the temperature of the cleaning liquid. The temperature of the coated film described here is the temperature of the coating surface immediately before the cleaning liquid is supplied, and can be measured with a radiation thermometer, for example.

When the temperature of the cleaning liquid to be supplied to the coated film or the coated film is increased as described above, the diameter of the droplets of the cleaning liquid is preferably 10 µm or larger. By doing so, the coating film can be cleaned even if part of the cleaning liquid volatilizes under high temperatures.

As the cleaning liquid for the removing method according to the present invention, any solvent exerts its effect if it is a solvent that can dissolve water-soluble resins, but water is preferably used to reduce load on the environment. A surfactant or other agent may be added to the cleaning liquid to improve wettability with the coated film and make it easier for the cleaning liquid to be distributed over the coating surface.

In the coating film removing method according to the present invention, the form of the coated film may be in a cut-sheet form, but it is particularly preferable to use the coated film wound in a roll form. By unwinding the coated film in a roll form, performing the coating film removing method according to the present invention, and winding the base film after the coating has been removed off, the process of removing coating film can be performed continuously and efficiently.

### [Equipment for removing coating of coated film]

Preferred embodiments of the coating film removing equipment will be described with reference to the drawings. The following description is an example of one of the embodiments according to the present invention, which is not limited to this, and various modifications may be made without departing from the gist of the present invention.

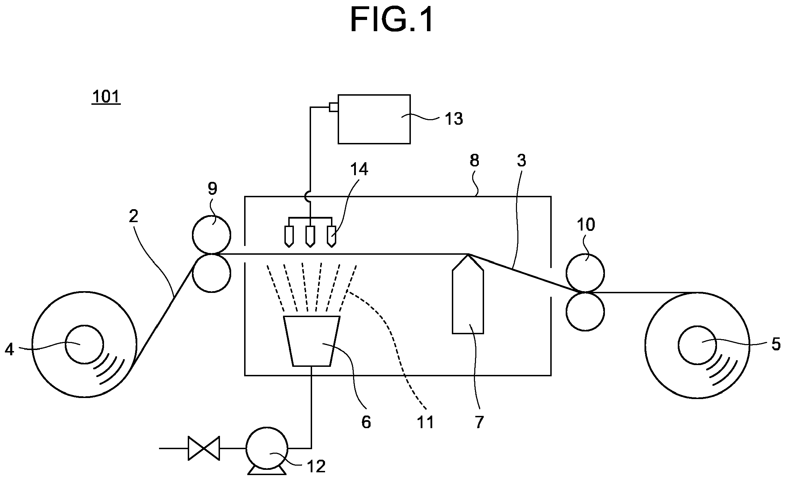

FIG. 1 is a schematic diagram of a coating film removing equipment 101 according to a first embodiment of the present invention. The coating film removing equipment 101 includes an unwinding device 4 that unwinds a coated film 2 and a winding device 5 that winds the base film 3 after the coating film has been removed off. Between the unwinding device 4 and the winding device 5, a drive unit 9 for conveying the coated film 2, a dispense head 6 for supplying a cleaning liquid 11 to the coating film of the coated film 2, removing equipment 7 for removing the coating film of the coated film 2 together with the cleaning liquid 11, and a drive unit 10 for conveying the base film 3 after the coating film has been removed off are provided. The dispense head 6, the removing equipment 7, and nozzles 14 (described later) are enclosed in a booth 8.

The coating film removing equipment further includes, as a cleaning-liquid supplying mechanism, a liquid feed pump 12 for feeding the cleaning liquid 11 to the dispense head 6 and a tank (not illustrated) for storing the cleaning liquid in addition to the dispense head 6.

The dispense head 6 only needs to be able to dispense the cleaning liquid 11 in the form of droplets and supply it to the coating surface of the coated film 2, and may be a spray nozzle, for example, but is not limited to this. The amount of the cleaning liquid 11 to be supplied to the coating surface of the coated film 2 is preferably set to 1 cm³/m² or more so that the coating film containing the water-soluble resin can be sufficiently dissolved. It is preferable to determine the specifications of the dispense head 6 and the liquid feed pump 12 so that the required amount of the cleaning liquid 11 can be supplied to the coating surface of the coated film 2 and the form of droplets can be maintained by adjusting the liquid feed pump 12 in accordance with the conveyance speed of the coated film 2.

The cleaning liquid 11 supplied to the coating surface of the coated film 2 needs to dissolve the water-soluble resin contained in the coating film before it is then conveyed to the removing equipment 7. In other words, to prevent the cleaning liquid 11 from flowing and dropping off from the coating surface due to vibration or inclination of the coated film 2 when the coated film 2 is conveyed, the size of the droplets is preferably set to 1 mm or less in diameter. Thus, the dispense head 6 is preferably selected that can produce droplets with a diameter of 1 mm or less.

The dispense head 6 and the removing equipment 7 only need to be installed so as to face the coating surface of the coated film 2, and the installation thereof is not limited to installation on the lower side as illustrated in FIG. 1. In order to be able to handle any case whether the coating film of the coated film 2 wound in a roll form is located on the inside or the outside of the roll, the unwinding device 4 is more preferably a mechanism that can unwind the coated film from either the upper side or the lower side by changing directions of unwinding the coated film 2 so that the coating surface of the coated film 2 can be conveyed in a manner facing the dispense head 6 and the removing equipment 7.

The dispense head 6 is preferably capable of dispensing a heated cleaning liquid 11 in order to quickly dissolve the water-soluble resin contained in the coating, and is preferably capable of dispensing the cleaning liquid 11 heated at 40°C or higher in particular. For heating the cleaning liquid 11, the dispense head 6 may include a heat source such as a cartridge heater, or the tank (not illustrated) for storing the cleaning liquid may be heated. However, the heating unit is not limited to these, and any unit that can heat the cleaning liquid 11 may be used.

The material of the dispense head 206 preferably has heat resistance in order to dispense the heated cleaning liquid 11, and metal or a heat-resistant resin is preferably used.

The coating removing equipment 101 includes a hot-air generator 13 as a unit of heating the coated film 2 and the nozzles 14 connected to the hot-air generator 13. By raising the temperature of the coated film 2 to 40°C or higher with hot air, the cleaning liquid 11 supplied to the coating surface quickly dissolves the water-soluble resin contained in the coating film, and the coating film can be more efficiently removed off. As the unit of heating the coated film 2, any unit may be used. For example, the coated film 2 may be brought into direct contact with a heating roll, or an infrared heater may be installed in the booth 8 for the heating, although the heating unit is not limited to these.

The booth 8 of the removing equipment 101 is provided so as to enclose the area from the dispense head 6 to the removing equipment 7 to prevent the cleaning liquid 11 in the form of droplets from dispersing around the area and to prevent the temperature of the heated cleaning liquid and/or the coated film 2 from decreasing. The material of the booth 8 preferably has heat resistance because the temperature inside the booth 8 becomes high, and metal or glass, for example, is preferably used.

In the removing equipment 101 according to the embodiment of the present invention, as the removing equipment 7, a metal plate with a sharp tip that comes into direct contact with the coated film 2 being conveyed is provided, but the removing equipment is not limited to this. A resin plate with a sharp tip may be provided, or a thin metal plate that is pressed against the coated film 2 to bend flexibly like a blade may be provided. Alternatively, a mechanism that rotates a brush roll made of metal or resin in the same direction as the conveyance direction or in the opposite direction may be provided to be brought into direct contact with the coating surface of the coated film 2, or a waste cloth or a fabric may be used to be pressed against the coated film 2 and wipe off the coating.

In the removing equipment 101 according to the embodiment of the present invention, a section from the dispense head 6 to the removing equipment 7 is provided such that the booth 8 encloses the section from the dispense head 6 to the removing equipment 7, because smaller droplets of the cleaning liquid 11 dispensed from the dispense head 6 more easily disperse around the area.

The drive units 9 and 10 in the present invention preferably have a configuration that can cut the tension in order to stably convey the coated film 2 and the base film 3 from which the coating film has been removed off. However, if the tension is cut by a suction roll, a part of the coating film of the coated film 2 may be sucked in and cause trouble, and thus a configuration nipped by a metal drive roll and a rubber roll is more preferably used. The drive units 9 and 10, to which the cleaning liquid 11 is likely to adhere, are used preferably with stainless steel or surface treatment being applied as a rust-preventive measure.

It is more preferable to completely remove the cleaning liquid 11 from the base film 3, from which the coating film has been removed off, wound by the winding device 5 in order to stably form a recycled film after remelting, and a drying device (not illustrated) may be provided between the removing equipment 7 and the winding device 5. The drying device only needs to be provided before winding, and may be provided either upstream or downstream of the drive unit 10.

In order to check the quality of the base film 3 after the coating film has been removed off, an inspection machine (not illustrated) that detects a residue of the coating film and environmental foreign matter attached in the process may be provided upstream of the winding device 5. The inspection machine may be selected in accordance with the properties of the base film 3, and an inspection machine using transmitted light or reflected light is preferably used. A marking device (not illustrated) for recording the locations of a residue of the coating and environmental foreign matter attached in the process that have been detected by the inspection machine may be provided between the inspection machine and the winding device 5. The method of marking by the marking device may be any method, such as using a pen, a sticker, or a laser, that can mark the location of a detection target. Marking the residue of the coating film and environmental foreign matter attached in the process allows such areas to be removed before remelting, and thus a recycled film can be more stably formed and also quality deterioration of the recycled film can be prevented.

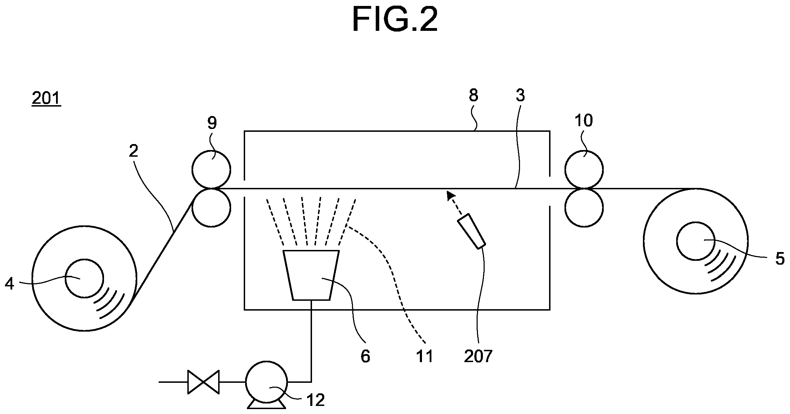

FIG. 2 is a schematic diagram of a removing equipment 201 according to a second embodiment of the present invention. The removing equipment 201 is provided with non-contact removing equipment 207 instead of the removing equipment 7 provided in the removing equipment 101 according to the first embodiment. The removing equipment 201 does not include the hot-air generator 13 and the nozzles 14, but may include the hot-air generator 13 and the nozzles 14. Other than the above, this removing equipment is the same as the removing equipment 101 illustrated in FIG. 1, and thus description is omitted for components that are the same as those of the removing equipment 101.

The non-contact removing equipment 207 only needs to be able to remove off the coating film together with the cleaning liquid 11 in a non-contact manner, and a method of blowing air or spraying the cleaning liquid 11 is used, for example. This prevents the conveyance resistance of the coated film 2 from increasing and the base film 3 from being damaged by scratches caused by contact, in comparison to the removing equipment 7 that is brought into direct contact with the coating surface.

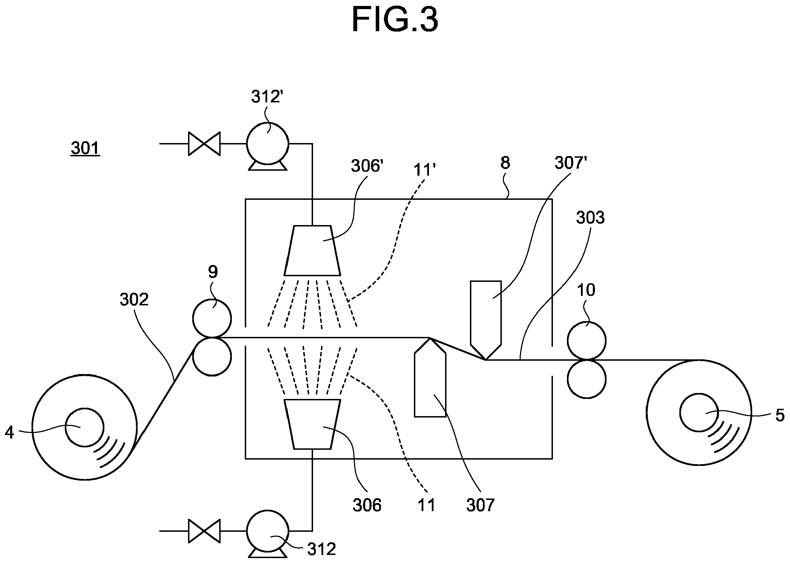

FIG. 3 is a schematic diagram of a removing equipment 301 that removes coatings from a coated film 302 including the coatings on both the front and back sides thereof, according to a third embodiment of the present invention. The removing equipment 301 is provided with, between the unwinding device 4 and the winding device 5, a first discharge head 306 for supplying the cleaning liquid 11 to the coating surface of one side of the coated film 302, a first removing equipment 307 for removing this coating film together with the cleaning liquid 11, a second dispense head 306' for supplying a cleaning liquid 11' to the coating surface of the other side, and a second removing equipment 307' for removing this coating film together with the cleaning liquid 11'. The second removing equipment 307' is provided in a manner being in direct contact with the coating surface on the opposite side of the first removing equipment 307 with the coated film 302 interposed therebetween. The removing equipment 301 further includes, as a cleaning-liquid supplying mechanism, in addition to the first dispense head 306 and the second dispense heads 306', liquid feed pumps 312 and 312' for feeding the cleaning liquids 11 and 11' to the first dispense head 306 and the second dispense head 306', and a tank (not illustrated) for storing the cleaning liquids 11 and 11'. The removing equipment 301 does not include the hot-air generator 13 or the nozzles 14, but may include the hot-air generator 13 and the nozzles 14. Other than these, this removing equipment is the same as the removing equipment 101 illustrated in FIG. 1, and thus description is omitted for components that are the same as those of the removing equipment 101.

The removing equipment 301 according to the present embodiment has an equipment configuration in which, to the coating surfaces of the coated film 302 including coating films on both the front and back sides, the cleaning liquids 11 and 11' are supplied simultaneously on the front and back sides, and the first removing equipment 307 and the second removing equipment 307' remove off the coating films together with the cleaning liquids 11 and 11' in this order. However, the configuration is not limited to this, and any configuration that can remove off the coating films together with the cleaning liquids 11 and 11' on the front and back sides respectively may be used. For example, this removing equipment may have an equipment configuration including the first dispense head 306 and the first removing equipment 307 and, downstream of these, including the second dispense head 306' and the second removing equipment 307', in which the coating films together with the cleaning liquids 11 and 11' are removed off from one side after another.

The first removing equipment 307 and the second removing equipment 307' are not limited to the configuration illustrated in FIG. 3, and non-contact removing equipment may be used.

In order to efficiently supply the cleaning liquids to the coating surfaces of the coated films 2 and 302, a device for exposing the coating surfaces of the coated films 2 and 302 may be provided between the unwinding device 4 and the drive unit 9. For example, when the coating films of the coated films 2 and 302 are made of a curable silicone resin compound containing dimethylsiloxane as a main skeleton, the coated film is preferably used as a release film for the process due to characteristics of its surface free energy. Specifically, after a substance to be released has been provided on a coating film of each coated film, the coated film is used as a release film for extracting the substance to be released in a desired shape. In the coated film after being used as such a release film for the process, the substance to be released may remain on the coating surface, and thus a device for exposing a coating surface of a coated film is preferably provided between the unwinding device 4 and the drive unit 9 to expose the coating surfaces of the coated films 2 and 302. The device for exposing the coating surfaces may be of a contact type or a non-contact type, and is appropriately selected in accordance with the state of the remaining substance to be released.

Examples of the substance to be released, which is to be appropriately selected in accordance with the characteristics of the coating film, include inorganic materials such as metal provided by vapor deposition, adhesives made of organic material such as acryl provided by a coating process, and ceramic green sheets containing barium titanate as a main component.

### [Examples]

The following describes Examples of the present invention, but the present invention is not necessarily limited to these.

### <Coated film>

A polyvinyl alcohol resin having a film thickness of 0.1 µm was formed, as a water-soluble resin, on a base film of polyethylene terephthalate having a thickness of 30 µm, and on top of that, a curable silicone resin having a film thickness of 0.1 um was formed, as a release component, whereby a coated film was prepared.

### <Removeability evaluation method>

Removeability was evaluated with commercially available dyne pens (surface energy: 30, 70 mN/m) and measured by the following method. Under the environment of a room temperature of 23°C, a drawing was done on a sample surface with each dyne pen. If the drawing in this state could be retained for 4 seconds or more, the surface energy of the sample surface was determined to be higher than the surface energy of the corresponding dyne pen. If the curable silicone resin of the release component of the coated film remains on the surface, the surface energy thereof is less than 30 mN/m, and thus reagents of both dyne pens are shed by the sample surface and the drawings cannot be retained. If the coating of the curable silicone resin as the release component has been removed off and the polyvinyl alcohol resin has been exposed, the surface energy thereof is 70 mN/m or higher, and thus the drawings by both dye pens can be retained. If both coatings of the curable silicone resin as the release component and the water-soluble polyvinyl alcohol resin have been removed off and the polyethylene terephthalate has been exposed, the surface energy thereof is 43.8 mN/m, and thus the drawing by 30-mN/m dyne pen can be retained, but the drawing by the 70-mN/m dyne pen cannot be retained. The above evaluation method was used to determine whether the coating of the coated film could be removed off.

### <Removing of coating from coated film>.

### [Example 1]

The coated film 2 was set in the unwinding device 4 of the removing equipment 101 illustrated in FIG. 1. While the coated film was being conveyed into the booth 8 by the drive unit 9, water (room temperature: 20°C) was applied as the cleaning liquid 11 to the coating surface in the form of droplets from a spray nozzle (1/4M KB 80063N S303-RW manufactured by Ikeuchi Co., Ltd.) of the discharge head 6 inside the booth 8. Subsequently, a plate with a sharp tip made of SUS630 was brought into contact with the coated film by the removing equipment 7, the coating film together with the cleaning liquid 11 in the form of droplets applied to the coating surface was removed off from the base film 3, and the base film 3 from which the coating film had been removed off was wound by the winding device 5. The conveyance speed was increased sequentially from 10 m/min to be set to 10, 30, 50, and 100 m/min. In Example 1, heating of the coated film 2 by the hot-air generator 13 and the nozzles 14 was not performed.

The cleaning liquid 11 dispensed from the spray nozzle was fed from a Mohno Pump (HEISHIN Ltd. CY08), the feed liquid amount was adjusted in accordance with the speed of conveyance, and the feed liquid amount was set to 30 cm³ per 1.0 m² unit area of the coated film 2 for each conveyance speed. The droplets of the cleaning liquid 11 applied to the coated film 2 were observed from the back side, and the diameter of the droplets was confirmed to be 1 mm at the maximum. When the temperature of the coated film was measured with a radiation thermometer from the back side of the coated film 2 immediately after the droplets had been applied, it was 20°C.

When the base film 3, from which the coating film had been removed off, after being wound by the winding device 5 was collected, the maximum conveyance speed at which both coating films of the curable silicone resin as the release component and the water-soluble polyvinyl alcohol resin could be removed off was 30 m/min. At the higher conveyance speeds of 50 and 100 m/min, it was observed in the removeability evaluation that the coating film of the curable silicone resin or the polyvinyl alcohol resin partially remained.

### [Example 2]

The operations in Example 1 were performed except that 50°C water was used as the cleaning liquid 11 to be dispensed from the spray nozzle (1/4M KB 80063N S303-RW manufactured by Ikeuchi Co., Ltd.) of Example 1. 50°C water, the temperature of which was adjusted by immersing an immersion heater in the tank for storing the cleaning liquid 11, was fed to the spray nozzles 6 by the liquid feed pump 12. The droplets of the cleaning liquid 11 supplied to the coated film 2 were observed from the back side, and the diameter of the droplets was confirmed to be 1.0 mm at the maximum. When the temperature of the coated film 2 was measured with the radiation thermometer from the back side of the coated film 2 immediately after the droplets had been supplied, it was 40°C.

When the base film 3, from which the coating film had been removed off, after being wound by the winding device 5 was collected, the maximum conveyance speed at which both coating films of the curable silicone resin as the release component and the water-soluble polyvinyl alcohol resin could be removed off was 50 m/min. At the conveyor speed of 100 m/min, it was observed in the removeability evaluation that the coating film of the curable silicone resin or the polyvinyl alcohol resin partially remained.

### [Example 3]

The operations in Example 2 were performed except that the temperature of water used as the cleaning liquid 11 in Example 2 was set to 90°C. The droplets of the cleaning liquid 11 supplied to the coated film 2 were observed from the back side, and the diameter of the droplets was confirmed to be 1.0 mm at the maximum. When the temperature of the coated film 2 was measured with the radiation thermometer from the back side of the coated film 2 immediately after the droplets had been supplied, it was 75°C.

When the base film 3, from which the coating film had been removed off, after being wound by the winding device 5 was collected, the maximum conveyance speed at which both coating films of the curable silicone resin as the release component and the water-soluble polyvinyl alcohol resin could be removed off was 100 m/min.

### [Example 4]

The operations in Example 1 were performed except that, in the removing equipment 101 of Example 1, hot air (60°C) generated by the hot-air generator 13 (TSK-56 manufactured by Kansai Electric Heat Corp.) was blown from the nozzles 14 including slit openings onto the back side of the coated film 2 at substantially the same time as the droplets were supplied. The droplets of the cleaning liquid 11 applied to the coated film 2 were observed from the back side, and the diameter of the droplets was confirmed to be 1.0 mm at the maximum. When the temperature of the coated film was measured with the radiation thermometer from the back side of the coated film 2 immediately after the application of the droplets and the blowing of the hot air, it was 40°C.

When the base film 3, from which the coating had been removed off, after being wound by the winding device 5 was collected, the maximum conveyance speed at which both coatings of the curable silicone resin as the release component and the water-soluble polyvinyl alcohol resin could be removed off was 50 m/min.

### [Comparative Example 1]

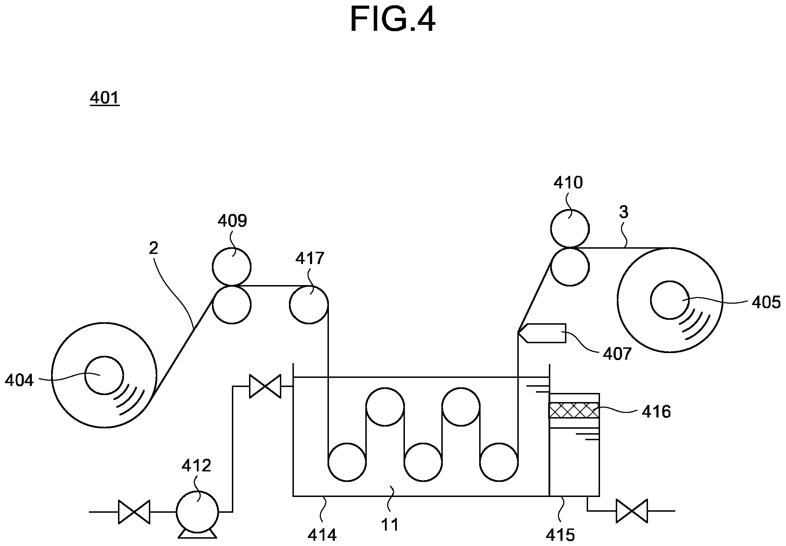

A conventional removing equipment 401 illustrated in FIG. 4 was used to remove the coating film of the coated film 2. The removing equipment 401 includes a water tank 414 that holds water as the cleaning liquid 11, a drainage tank 415 that is adjacent such that the liquid level of the water tank 414 overflows and drains thereinto, and a filtration filter 416 for separating removed coating films contained in the drainage.

The coated film 2 was set on an unwinding device 404 of the removing equipment 401, was conveyed by a drive unit 409 to the water tank 414 to be brought into contact with water (room temperature: 20°C) as the cleaning liquid 11, and was then brought into contact with a plate with a sharp tip made of SUS630 by removing equipment 407 to remove off the coating film together with the cleaning liquid 11, and the base film 3 from which the coating film had been removed off was wound by a winding device 405.

The feed liquid amount of a new cleaning liquid 11 to be fed into the water tank 414 was confirmed to be the minimum required feed liquid amount by checking the state of the coating being removed. As the water-soluble polyvinyl alcohol resin contained in the coating dissolved and the concentration of the solution increased, the solubility of the polyvinyl alcohol resin decreased. Thus, the cleaning liquid 11 of 25,000 cm³ per unit area (1 m²) of the coated film needed to be fed in order to continuously remove off the coating.

When the base film 3, from which the coating film had been removed off, after being wound by the winding device 405 was collected, the conveyance speed at which both coating films of the curable silicone resin as the release component and the water-soluble polyvinyl alcohol resin could be removed off was 50 m/min at the maximum. At the conveyance speed of 100 m/min, it was observed in the removability evaluation that the coating films of the curable silicone resin and the polyvinyl alcohol resin partially remained.

### [Comparative Example 2]

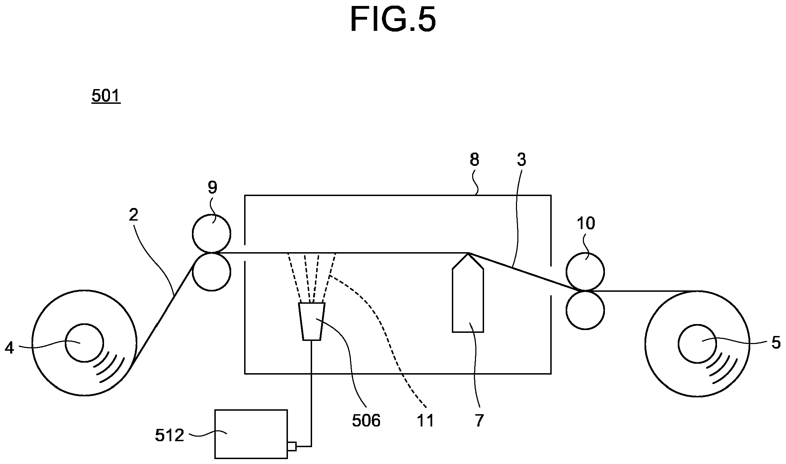

A removing equipment 501 illustrated in FIG. 5 was used to remove the coating film of the coated film 2. The removing equipment 501 includes a pressure device 512 and a dispense head 506 to dispense water as the cleaning liquid 11 at high pressure.

The operations in Example 1 were performed except that, instead of the spray nozzle 6 of Example 1, the pressure device 512 and the discharge head 506 were used such that the cleaning liquid 11 became high-pressure water and the conveyance speed was limited to 50 m/min. The high-pressure water (room temperature: 20°C) was dispensed from the included dispense head 506 toward the coating film surface of the coated film 2 by using the pressure device 512 (K2 Classic high pressure washer manufactured by Kärcher Japan Co., Ltd.). The cleaning liquid 11 dispensed at high pressure was dispensed continuously and in large amount in order to maintain the high pressure, and thus it did not form droplets at all when it adhered to the coated film 2, but rather dripped from the entire surface of the coated film 2. Furthermore, the cleaning liquid 11 that had bounced off the surface of the coated film 2 accumulated in large amount in the booth 8. When the temperature of the coated film 2 was measured with a radiation thermometer from the back side of the coated film 2 immediately after the cleaning liquid 11 had been applied, it was 20°C.

When the base film 3, from which the coating film had been removed off, after being wound up by the winding device 5 was collected and the amount of the high-pressure water that could remove off both coatings of the curable silicone resin as the release component and the water-soluble polyvinyl alcohol resin was checked, the high-pressure water of 800 cm³ per 1.0 m² unit area of the coated film was necessary. Herein, the amount of the high-pressure water was derived by collecting the coating film containing the cleaning liquid 11, which had been removed off by the removing equipment 7, and the cleaning liquid 11 accumulated in the booth, calculating the amount of the cleaning liquid 11 from results of weight measurement, and converting it into the amount per unit area of the coated film 2.

### [Comparative Example 3]

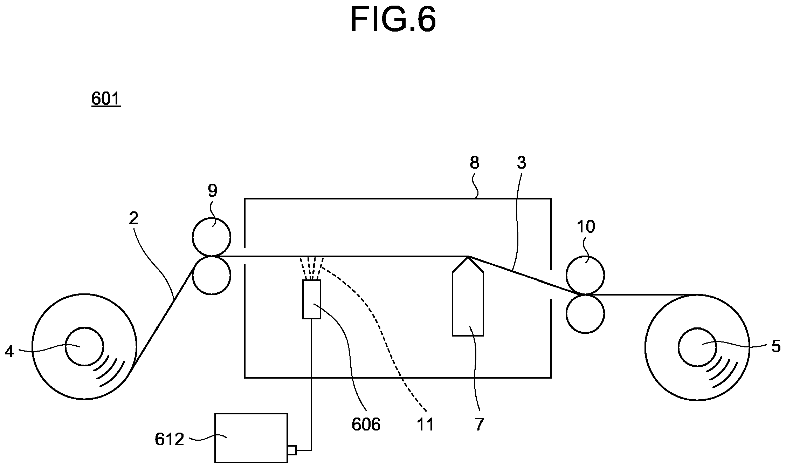

A removing equipment 601 illustrated in FIG. 6 was used to remove the coating film of the coated film 2. The removing equipment 601 includes a steam generator 612 and a dispense head 606 for dispensing water as the cleaning liquid 11 in the form of steam.

The operations in Example 1 were performed except that, instead of the spray nozzle 6 of Example 1, the steam generator 612 and the discharge head 606 were used such that the cleaning liquid 11 became steam and the conveyance speed was limited to 30 m/min. The steam was dispensed from the dispense head (ϕ10 bore nozzle) toward the coating film surface of the coated film 2 by using a steam generator (BOILER.V manufactured by Nihon Dennetsu Co., Ltd.). The dispensed steam was a large amount of steam that had a dispense temperature of 100°C and the dispense pressure of which was 0.4 MPa. Thus, its behavior could be observed in which, even when it had adhered to the coated film 2, the form of droplets could not be maintained, and immediately a large number of droplets joined together to form droplets larger than 1 mm, and ran down from the surface of the coated film 2. It could also be observed that areas where no cleaning liquid 11 remained appeared in areas from which the droplets larger than 1 mm had run down. Furthermore, the cleaning liquid 11 that had run down from the surface of the coated film 2 accumulated in large amount in the booth 8. When the amount of the cleaning liquid 11 used was measured, it was determined to be 200 cm³ per unit area of 1.0 m² of coated film 2. The amount of the cleaning liquid 11 used for steam was derived by collecting the coating film containing the cleaning liquid 11, which had been removed off by the removing equipment, and the cleaning liquid 11 accumulated in the booth, calculating the amount of the cleaning liquid 11 from results of weight measurement, and converting it into the amount per unit area of the coated film 2. When the temperature of the coated film 2 was measured with the radiation thermometer from the back side of the coated film 2 immediately after the cleaning liquid 11 had been applied, it was 85°C. Similarly, when the film temperature at areas from which the droplets larger than 1 mm had run down was measured, it was 50°C.

As a result of the removability evaluation by taking the base film 3, from which the coating film had been removed off, after being wound by the winding device 5, it was observed that there were portions in which the coating films of the curable silicone resin and the polyvinyl alcohol resin partially remained in areas, from which the droplets larger than 1 mm had run down, on the surface of the coated film 2.

**Table 1**

| | | Example 1 | Example 2 | Example 3 | Example 4 | Comparative Example 1 | Comparative Example 2 | Comparative Example 3 |
|---|---|---|---|---|---|---|---|---|
| Temperature of cleaning liquid [°C] | | 20 | 50 | 90 | 20 | 20 | 20 | 100 |
| Amount used of cleaning liquid per unit area [cm²/m²] | | 30 | 30 | 30 | 30 | 25000 | 800 | 200 |
| Coating surface temperature [°C] | | 20 | 40 | 75 | 40 | 20 | 20 | 85 *50 |
| Whether coating film was able to be removed off o: Coating film removed off x: Coating film remaining | Conveyance speed 30m/min | ○ | ○ | ○ | ○ | ○ | - | × |
| | Conveyance speed 50m/min | × | ○ | ○ | ○ | ○ | ○ | - |
| | Conveyance speed 100m/min | × | × | ○ | × | × | - | - |

| | | | | | | | | |
|---|---|---|---|---|---|---|---|---|
| * **The** temperature of the coating film surface in areas from which droplets larger than 1 mm ran down | | | | | | | | |

### [Comparison between Examples 1 to 4 and Comparative Examples 1 to 3]

In Examples 1 to 4 of the present invention, the amount of the cleaning liquid used per unit area could be significantly reduced in comparison with Comparative Example 1 using the conventional removing equipment 401, Comparative Example 2 using a high-pressure cleaning liquid in the removing equipment 501, and Comparative Example 3 using a steam injection in the removing equipment 601. Thus, in Examples 1 to 4, the amount of wastewater can be significantly reduced, and thus load on the environment can be reduced and the cleaning cost can be reduced.

In Comparative Example 3, the droplets had run down from the surface of the coated film and it was confirmed that the coating film partially remained at areas from which the droplets had run down. Thus, it could be demonstrated that it is important to retain the droplets on the surface of the coated film as in Examples 1 to 4 in order to remove off the coating film.

### [Comparison among Examples 1, 2, and 3]

In Example 2, by increasing the temperature of the cleaning liquid to 50°C, the conveyance speed at which the coating film of the coated film could be removed off could be set higher than in Example 1 in which the temperature of the cleaning liquid was 20°C, and the coating film could be removed off even at the conveyance speed of 50 m/min at the maximum. In Example 3, by increasing the temperature of the cleaning liquid to 90°C, the conveyance speed at which the coating film of the coated film could be removed off could be set still higher, and the coating film could be removed off even at the conveyance speed of 100 m/min.

### [Comparison among Examples 1, 2, and 4]

In Example 2 in which the temperature of the coated film was set to 45°C by increasing the temperature of the cleaning liquid to 50°C and in Example 4 in which the temperature of the coated film was increased to 40°C by applying the cleaning liquid at room temperature (20°C), the conveyance speeds at which the coating film of the coated film could be removed off were equally 50 m/min at the maximum. In both methods of heating the coated film, by setting the temperature of the coated film to 40°C, the conveyance speed at which the coating film could be removed off could be set higher than in Example 1 in which the temperature of the coated film was set to room temperature (20°C) .

### Industrial Applicability

The removing method and removing equipment for a coated film according the present invention can be suitably used for reuse of a film including a release layer. The coated film that can be used in the removing method and the removing equipment for a coated film according to the present invention is not limited to a film including a coating containing a water-soluble resin on one side of a base film, and only needs to be a recyclable resin film, a paper film, or a metal film including a coating containing a readily soluble resin layer.

### Reference Signs List

2 coated film
3, 303 base film
4, 404 unwinding device
5, 405 winding device
6, 506 dispense head
7, 407 removing equipment
8 booth
9, 10, 409, 410 drive unit
11, 11' cleaning liquid
12, 412 liquid feed pump
13 hot-air generator
14 nozzle
101, 201, 301 removing equipment
207 non-contact removing equipment
302 double-sided coated film
306 first dispense head
306' second dispense head
307 first removing equipment
307' second removing equipment
312 first liquid feed pump
312' second liquid feed pump
401 conventional removing equipment
414 water tank
415 drainage tank
416 filtration filter
417 guide roll
512 pressure device

## Claims

1. A method for removing a coating film from a coated film including a coating film containing a water-soluble resin on at least one side of a base film, the method comprising:
supplying a cleaning liquid in a form of droplets to a surface of the coating film, and retaining the cleaning liquid in the form of droplets on the surface of the coating film; and
subsequently removing the coating film containing the cleaning liquid from the coated film.

2. The method for removing a coating film from a coated film according to claim 1, wherein the cleaning liquid is supplied to the surface of the coating film while being heated to 40°C or higher.

3. The method for removing a coating film from a coated film according to claim 1 or 2, wherein the coated film is heated to 40°C or higher.

4. The method for removing a coating film from a coated film according to any one of claims 1 to 3, wherein the coating film contains a curable silicone resin.

5. The method for removing a coating film from a coated film according to any one of claims 1 to 4, wherein the cleaning liquid is water.

6. The method for removing a coating film from a coated film according to any one of claims 1 to 5, wherein a diameter of the droplets of the cleaning liquid is 1 mm or less.

7. An equipment for removing a coating film from a coated film including a coating film containing a water-soluble resin on at least one side of a base film, the equipment comprising:
a cleaning-liquid supplying mechanism configured to dispense a cleaning liquid in a form of droplets toward a surface of the coating film such that the cleaning liquid is able to be retained in the form of droplets on the surface of the coating film; and
a removing mechanism configured to remove the coating film containing the cleaning liquid from the coated film in which the cleaning liquid has been supplied to the surface of the coating film.

8. The equipment for removing a coating film from a coated film according to claim 7, wherein the cleaning-liquid supplying mechanism includes a unit configured to heat the cleaning liquid.

9. The equipment for removing a coating film from a coated film according to claim 7 or 8, further comprising a unit configured to heat the coated film.
